# EUROPEAN PATENT APPLICATION

(11) **EP 4 826 836 A1**
(43) Date of publication of application: **21.10.2026**
(21) Application number: 26170467.0
(22) Date of filing: 02.04.2026
(51) Int. Cl.: H01M 10/48, G01M 3/38, G01N 21/3504, H01M 10/42

(54) **METHOD AND SYSTEM FOR DETECTING GAS IN BATTERY PACKS**

(30) Priority: 04.04.2025 KR 20250044030
(71) Applicant: SAMSUNG SDI CO., LTD., Yongin-si, Gyeonggi-do 17084 (KR)
(72) Inventor: Jang, Kwanyup, Yongin-Si Gyeonggi-do 17084 (KR); Lee, Jeongmin, Yongin-Si Gyeonggi-do 17084 (KR)
(74) Representative: Gulde & Partner

(57) **Abstract**

A method for a battery pack includes irradiating light into a peripheral region of the battery pack. The method further includes detecting light from the peripheral region, and detecting that gas leaking from the battery pack based on data associated with the detected light.

## Description

### BACKGROUND

### TECHNICAL FIELD

The present disclosure relates to a method and a system for detecting gas in a battery pack.

### DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

To utilize secondary batteries effectively, a battery module may include a plurality of secondary batteries, and a battery pack may include a plurality of battery modules. When an event such as thermal runaway, overcharging, or mechanical damage occurs in the battery pack, harmful gas may leak from the battery pack. Harmful gas generated in an enclosed space, such as an electric vehicle or a hybrid vehicle that employs the battery pack, may cause accidents, such as explosions.

The above information disclosed in this Background section is for enhancement of understanding of the background of the present disclosure, and therefore, it may contain information that does not constitute related (or prior) art.

### SUMMARY

The present disclosure provides a method and a system for detecting gas in a battery pack to solve the above-described technical problems.

These and other aspects and features of the present disclosure will be described in or will be apparent from the following description of embodiments of the present disclosure.

According to an embodiment of the present disclosure, a method (e.g., of detecting gas in a battery pack and/or for monitoring the battery pack) includes: irradiating light into a peripheral region of the battery pack, detecting light from the peripheral region, and detecting that gas leaking is from the battery pack based on data associated with the detected light.

According to an embodiment of the present disclosure, the irradiating light irradiated is laser light emitted by a light irradiator and/or in multiple directions. This enhances security of the battery pack, e.g., the gas detection.

According to an embodiment of the present disclosure, the light irradiator may include an amplification medium and/or a scattering medium. This enhances security of the battery pack, e.g., the gas detection.

According to an embodiment of the present disclosure, the light, e.g., a spectrum of the light, irradiated by the light irradiator may include an infrared spectrum. Alternatively or additionally the detected light may include the infrared spectrum. This enhances security of the battery pack, e.g., the gas detection.

According to an embodiment of the present disclosure, the irradiating light is emitted by a light irradiator and/or the detected light is detected by a light detector, and preferably, the light irradiator and/or the light detector may be disposed adjacent to the battery pack. This enhances security of the battery pack, e.g., the gas detection.

According to an embodiment of the present disclosure, at least one of a position and a number of the light irradiators may be determined based on a form of the battery pack. This enhances security of the battery pack, e.g., the gas detection.

According to an embodiment of the present disclosure, at least one of a position and a number of the light detectors may be determined based on a path of the light irradiated by the light irradiator. This enhances security of the battery pack, e.g., the gas detection.

According to an embodiment of the present disclosure, the light detector may include at least one of an infrared detector and an infrared camera. This enhances security of the battery pack, e.g., the gas detection.

According to an embodiment of the present disclosure, the data associated with the detected light may include spectrum data of the detected light. This enhances security of the battery pack, e.g., the gas detection.

According to an embodiment of the present disclosure, detecting the gas may include determining whether an intensity reduction occurs in a predetermined spectrum of the detected light based on the spectrum data of the detected light, and determining whether the gas leaks based on determining the intensity reduction from the battery pack. This enhances security of the battery pack, e.g., the gas detection.

According to an embodiment of the present disclosure, the predetermined spectrum may be associated with a spectrum of gas that leaks from the battery pack. This enhances security of the battery pack, e.g., the gas detection.

According to an embodiment of the present disclosure, the data associated with the detected light may include phase data and intensity data of the detected light. This enhances security of the battery pack, e.g., the gas detection.

According to an embodiment of the present disclosure, detecting the gas may include determining whether a speckle pattern associated with the detected light changes based on the phase data and/or the intensity data of the detected light, and preferably, determining whether the gas leaks based on a result of determining the change in the speckle pattern. This enhances security of the battery pack, e.g., the gas detection.

According to an embodiment of the present disclosure, determining whether the speckle pattern changes may include generating speckle pattern data associated with the detected light based on the phase data and/or the intensity data of the detected light using a first machine learning model, and, preferably, determining whether the speckle pattern changes based on the generated speckle pattern data. This enhances security of the battery pack, e.g., the gas detection.

According to an embodiment of the present disclosure, the method may further include generating, using a second machine learning model, data indicative of a type and/or a concentration of the gas based on the data associated with the detected light. This enhances security of the battery pack, e.g., the gas detection.

According to an embodiment of the present disclosure, the method may further include, when the gas is detected, providing data associated with the detected gas, wherein the data associated with the detected gas may include a type, a concentration, and/or a detection time of the detected gas, e.g., the type, the concentration, and the detection time of the detected gas. This enhances security of the battery pack, e.g., by providing further details to the gas detection.

According to an embodiment of the present disclosure, the method may further include, when the gas is detected, providing at least one of a visual indicator and an auditory indicator that represents detection of the gas. This enhances security of the battery pack.

According to an embodiment of the present disclosure, the method may further include, when the gas is detected, providing at least one of a ventilation command for ventilating the gas and/or a stop command for stopping operation of the battery. This enhances security of the battery pack.

According to another embodiment of the present disclosure, a non-transitory computer-readable recording medium storing instructions that, when executed by a computer, cause the computer to perform the method for detecting gas in a battery pack may be provided. This enhances security of the battery pack.

According to an embodiment of the present disclosure, a system (e.g., for detecting gas in a battery pack) includes a light irradiator configured to irradiate light into a peripheral region of the battery pack, a light detector configured to detect light from the peripheral region, and a gas detector configured to detect gas leaking from the battery pack based on data associated with the detected light. This enhances security of the battery pack.

According to embodiments of the present disclosure, a peripheral region of the battery pack can be monitored in real time. Accordingly, gas leaking from the battery pack can be detected more accurately and quickly. Furthermore, because the light irradiator itself includes an amplification medium, an additional device such as a resonator is not required, so the gas detection system for the battery pack can be easily integrated into industrial environments. This enhances security of the battery pack.

According to some embodiments of the present disclosure, when gas is detected, a warning regarding gas leakage is provided and operation of the battery can be stopped. Accordingly, accidents caused by gas leakage from the battery pack can be prevented. This enhances security of the battery pack.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a gas detection system for a battery pack according to an embodiment of the present disclosure.
FIG. 2 is a schematic diagram of a configuration in which an information processing system is connected so as to be able to communicate with a plurality of user terminals and an external system to detect gas in a battery pack according to an embodiment of the present disclosure.
FIG. 3 is a block diagram of internal configurations of a user terminal and an information processing system according to an embodiment of the present disclosure.
FIG. 4 illustrates a light irradiator according to an embodiment of the present disclosure.
FIG. 5 illustrates a light irradiator and a light detector according to an embodiment of the present disclosure.
FIG. 6 is a flowchart of a method of detecting gas in a battery pack according to an embodiment of the present disclosure.
FIG. 7 is a flowchart of another method of detecting gas in a battery pack according to an embodiment of the present disclosure.
FIG. 8 illustrates a machine-learning model according to an embodiment of the present disclosure.
FIG. 9 illustrates an example response method when gas is detected according to an embodiment of the present disclosure.
FIG. 10 is a flowchart of method of detecting gas in a battery pack according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with an upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked," or "connected" to each other, or another component may be "interposed" between the components.

Throughout the specification, when "A and/or B" is stated, it means A, B, or A and B, unless otherwise stated. That is, "and/or" includes any or all combinations of a plurality of items enumerated. When "C to D" is stated, it means C or greater and D or less, unless otherwise specified.

In the present disclosure, sizes and relative sizes of layers and regions shown in the drawings may be exaggerated for clarity of description. That is, the sizes shown in the drawings are only for ease of understanding and are not limited thereto. Throughout the specification, the same reference numerals designate the same elements.

In the present disclosure, the term "peripheral region of the battery pack" refers to both an external region and an internal region of the battery pack. The peripheral region of the battery pack includes regions in multiple directions with respect to a center of the battery pack. The peripheral region of the battery pack is not limited to representing a physical boundary and may refer to a region that can be affected by the battery pack and electric, chemical, and environmental factors.

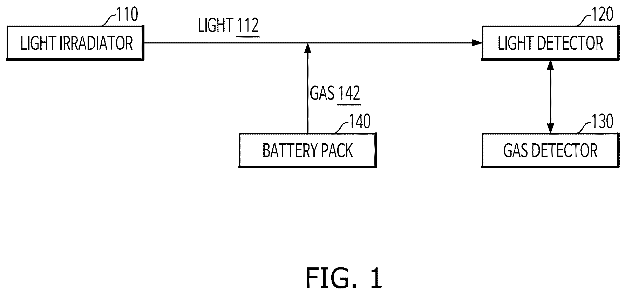

FIG. 1 illustrates a gas detection system for a battery pack 140 according to an embodiment of the present disclosure.

Referring to FIG. 1, the gas detection system for the battery pack 140 may include a light irradiator 110, a light detector 120, and a gas detector 130. The light irradiator 110 may irradiate light 112 onto a peripheral region of the battery pack 140. The light 112 irradiated by the light irradiator 110 may include laser light that is emitted in multiple directions. The light irradiator 110 may include an amplification medium and a scattering medium. Thus, the light irradiator may emit laser light having high intensity in multiple directions. For example, the light irradiator 110 may emit a random laser.

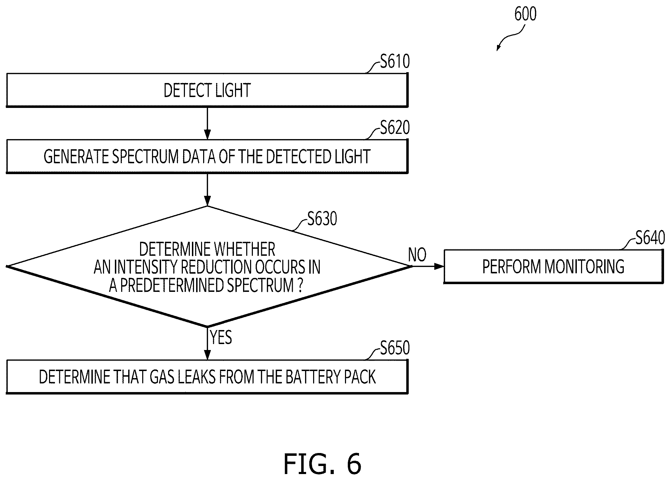

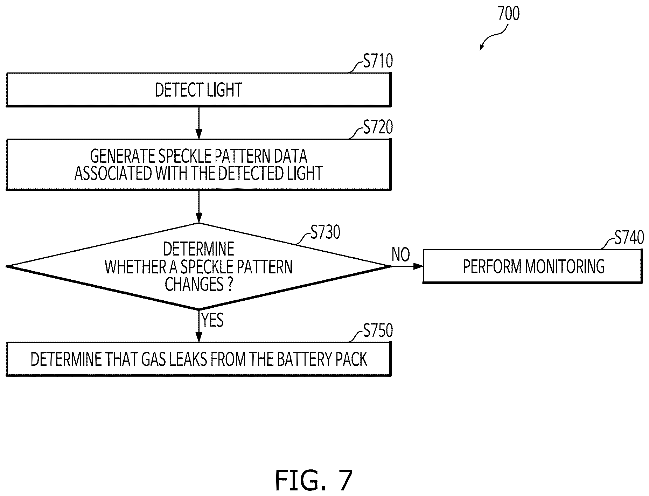

In an embodiment, the light detector 120 may detect light in the peripheral region of the battery pack 140. The light detector 120 may include at least one of an infrared detector (IR detector) or an infrared camera (IR camera). The gas detector 130 may detect gas 142 leaking from the battery pack 140 based on data associated with the light that is detected by the light detector 120. Specifically, when gas 142 leaks from the battery pack 140, the light 112 irradiated from the light irradiator 110 may interact with the gas 142 or the battery pack 140 and then be detected by the light detector 120. The data associated with the detected light may include at least one of spectrum data, thermal data, or phase and intensity data of the detected light. The gas detector 130 may determine whether the gas 142 leaks based on the data associated with the detected light. Additionally, the gas detector 130 may generate data associated with a type and a concentration of the leaked gas 142 based on the data associated with the detected light. Examples of a method of determining whether the gas 142 leaks are described in detail below with reference to FIGS. 6 and 7.

In an embodiment, a spectrum of the light 112 irradiated by the light irradiator 110 may include an infrared spectrum corresponding to a spectrum of harmful gas 142 generated in the battery pack 140. Types of harmful gases 142 generated in the battery pack 140 and their absorption spectra are shown in Table 1 below. However, the present disclosure is not limited to detecting the gases listed in Table 1.

**Table 1**

| Hazardous gas | Absorption spectrum |
|---|---|
| Hydrogen sulfide (H₂S) | ~ 1.57 µm, 2.5 µm, 4.0 µm |
| Hydrogen fluoride (HF) | ~ 1.3 µm, 2.5 ~ 3.5 µm |
| Carbon monoxide (CO) | ~ 4.6 µm |

In an embodiment, the spectrum of the light 112 irradiated by the light irradiator 110 may be tuned through a peak shift so that at least a part of the spectrum of the light 112 overlaps an infrared spectrum. For example, the peak shift may be performed by using a silver nanocluster as both an amplification medium and a scattering medium of the light 112, by using an organic dye molecule that emits infrared light as the scattering medium of the light 112, by using a thulium-doped fiber as the amplification medium of the light 112, or by using BaGa₄Se₇, a non-linear compound, as the amplification medium of the light 112. Accordingly, the irradiated light 112 may interact with an absorption spectrum corresponding to an infrared band of harmful gas 142 leaking from the battery pack 140.

With the configuration described herein, a wide peripheral region of the battery pack can be monitored in real time. Accordingly, gas leaking from the battery pack can be detected more accurately and quickly. Further, because the light irradiator itself includes an amplification medium, an additional device such as a resonator is not required, so the gas detection system for the battery pack can be easily integrated into various environments.

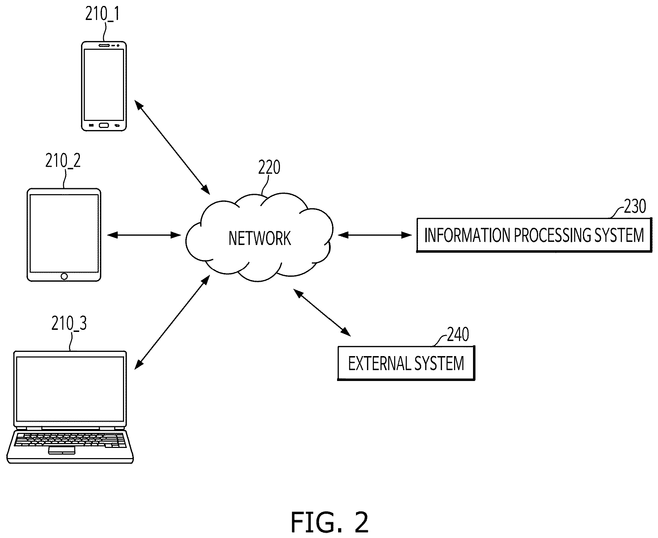

FIG. 2 is a schematic diagram illustrating a configuration in which an information processing system 230 is connected to communicate with a plurality of user terminals 210_1, 210_2, 210_3 and an external system 240 to detect gas in a battery pack according to an embodiment of the present disclosure.

Referring to FIG. 2, the plurality of user terminals 210_1, 210_2, 210_3 may be connected to an information processing system 230 capable of providing a gas detection service for a battery pack through a network 220. The plurality of user terminals 210_1, 210_2, 210_3 may be terminals for users to receive the gas detection service for a battery pack. The information processing system 230 may transmit data and/or commands associated with detecting gas in a battery pack to the external system 240 through the network 220. The external system 240 may be, for example, a system associated with an electric vehicle or a hybrid vehicle equipped with the battery pack. For example, the external system 240 may include a battery management system (BMS) or a vehicle control unit (VCU) of an electric vehicle. But the present disclosure is not limited to these examples.

The information processing system 230 may include one or more server devices and/or databases capable of storing, providing, and executing computer-executable programs (for example, downloadable applications) and data associated with providing the gas detection service for a battery pack, or one or more distributed computing devices, and/or distributed databases based on a cloud computing service.

The gas detection service for a battery pack provided by the information processing system 230 may be provided to users through a gas detection application for a battery pack, with the gas detection application being installed on each of the plurality of user terminals 210_1, 210_2, 210_3, or being provided by a web browser, a web-browser extension, or the like. For example, the information processing system 230 may provide information corresponding to a gas detection request for a battery pack received from the user terminals 210_1, 210_2, 210_3 through the gas detection application for a battery pack or may perform processing corresponding thereto.

The plurality of user terminals 210_1, 210_2, 210_3 may communicate with the information processing system 230 through the network 220. That is, the network 220 may be configured to enable communication between the plurality of user terminals 210_1, 210_2, 210_3 and the information processing system 230. Depending on an installation environment, the network 220 may include, for example, a wired network such as Ethernet, a wired home network (power line communication), telephone-line communication devices, and RS-serial communication, a wireless network such as a mobile communication network, a WLAN (wireless LAN), Wi-Fi, Bluetooth, or ZigBee, or a combination thereof. But communication modes are not limited, and the network 220 may include, in addition to communication modes using communication networks included in the network 220 (for example, a mobile communication network, wired Internet, wireless Internet, a broadcasting network, or a satellite network), short-range wireless communication between the user terminals 210_1, 210_2, 210_3.

Although a mobile-phone terminal 210_1, a tablet terminal 210_2, and a PC terminal 210_3 are illustrated as examples of the user terminals in FIG. 2, the present disclosure is not limited to these examples. The user terminals 210_1,210_2,210_3 may be any type of computing device capable of wired and/or wireless communication and on which a gas detection application for a battery pack or a web browser can be installed and executed. In other examples, the user terminals may include an Al speaker, a smart phone, a cellular phone, a navigation device, a computer, a notebook, a terminal for digital broadcasting, a personal digital assistant (PDA), a portable multimedia player (PMP), a tablet PC, a game console, a wearable device, an IoT (Internet of Things) device, a virtual-reality (VR) device, an augmented-reality (AR) device, a set-top box, or the like. Although FIG. 2 illustrates three user terminals 210_1, 210_2, 210_3 communicating with the information processing system 230 through the network 220, the present disclosure is not limited thereto. Rather, different numbers of user terminals may be configured to communicate with the information processing system 230 through the network 220.

FIG. 2 illustrates a configuration in which a user request (for example, a gas detection request for a battery pack) is transmitted to the information processing system 230 through the user terminals 210_1, 210_2, 210_3. But the present disclosure is not limited to the configuration depicted in FIG. 2. A user request may be provided to the information processing system 230 through an input device associated with the information processing system 230 without passing through the user terminals 210_1, 210_2, 210_3. And a result of processing the user request (for example, data and/or commands associated with detecting gas in a battery pack) may be provided to the user through an output device (for example, a display) associated with the information processing system 230.

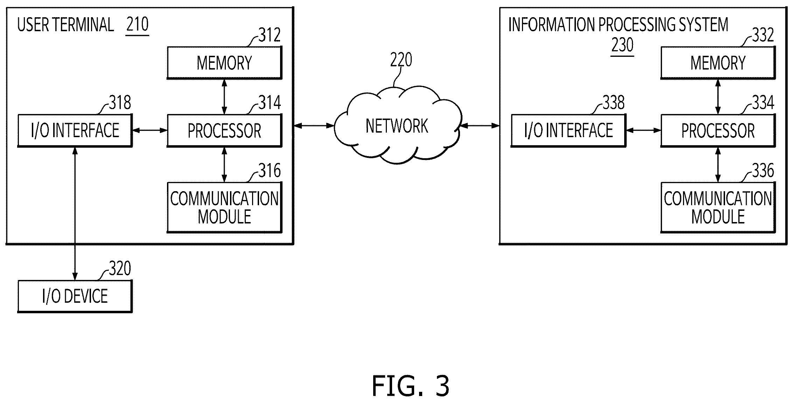

FIG. 3 is a block diagram showing internal configurations of a user terminal 210 and an information processing system 230 according to an embodiment of the present disclosure.

Referring to FIG. 3, the user terminal 210 may be any computing device capable of executing an application, a web browser, or the like and capable of wired/wireless communication. The user terminal 210 may include, for example, the mobile-phone terminal 210_1, the tablet terminal 210_2, and the PC terminal 210_3 depicted in FIG. 2. As illustrated, the user terminal 210 may include a memory 312, a processor 314, a communication module 316, and an input/output interface 318. Similarly, the information processing system 230 may include a memory 332, a processor 334, a communication module 336, and an input/output interface 338. The user terminal 210 and the information processing system 230 may be configured to communicate information and/or data through the network 220 by using the respective communication modules 316 and 336. An input/output device 320 may be configured to input information and/or data to the user terminal 210 or to output information and/or data generated by the user terminal 210 and sent to the input/output device 320 by the input/output interface 318.

The memories 312 and 332 may include any non-transitory computer-readable recording media. According to an embodiment, the memories 312 and 332 may include permanent mass-storage devices such as a ROM (read-only memory), a disk drive, a solid-state drive (SSD), or a flash memory. In another example, permanent mass-storage devices, such as a ROM, an SSD, a flash memory, or a disk drive, may be included in the user terminal 210 or the information processing system 230 as separate permanent storage devices distinguished from the memories. The memories 312 and 332 may store software components such as an operating system and at least one program code.

These software components can be loaded from computer readable recording media separate from the memories 312 and 332. Such separate computer readable recording media may include recording media directly connectable to the user terminal 210 and the information processing system 230, for example, computer-readable recording media such as floppy drives, disks, tapes, DVD/CD-ROM drives, and memory cards. In another example, the software components may be loaded into the memories 312 and 332 through the communication modules 316 and 336 rather than from computer readable recording media. For example, at least one program may be loaded into the memories 312 and 332 based on a computer program installed by files provided by developers or a file-distribution system that distributes installation files of applications through the network 220.

The processors 314 and 334 may be configured to process instructions of computer programs by performing basic arithmetic, logic, and input/output operations. The instructions may be provided to the processors 314 and 334 by the memories 312 and 332 or the communication modules 316 and 336. For example, the processors 314 and 334 may be configured to execute instructions provided by the program code stored in recording devices such as the memories 312 and 332.

The communication modules 316 and 336 may provide configurations or functions for communicating between the user terminal 210 and the information processing system 230 through the network 220, and the communication modules 316 and 318 may provide configurations or functions for the user terminal 210 and/or the information processing system 230 to communicate with other user terminals or other systems (e.g., a separate cloud system). For example, a request or data (e.g., a gas detection request for a battery pack) generated by the processor 314 of the user terminal 210 using program code stored in a recording device such as the memory 312 may be transmitted to the information processing system 230 through the network 220 under control of the communication module 316. Conversely, a control signal or command provided by the processor 334 of the information processing system 230 may be received by the user terminal 210 through the communication module 316 via the communication module 336 and the network 220.

The input/output interface 318 may be a means for interfacing with the input/output device 320. For example, an input device may include a camera including an audio sensor and/or an image sensor, a keyboard, a microphone, or a mouse, and an output device may include a display, a speaker, or a haptic-feedback device. In another example, the input/output interface 318 may be a means for interfacing with a device in which configurations or functions for performing input and output are integrated into one, such as a touchscreen. For example, in processing instructions of a computer program loaded in the memory 312 by the processor 314 of the user terminal 210, a service screen configured by using information and/or data provided by the information processing system 230 or another user terminal may be displayed on the display through the input/output interface 318. Although the input/output device 320 is illustrated as not being included in the user terminal 210 in FIG. 3, the present disclosure is not limited to such a configuration, and the input/output device 320 and the user terminal 210 may be provided as one device. The input/output interface 338 of the information processing system 230 may be a means for interfacing with a device (not illustrated) for input or output that is connected to or included in the information processing system 230. Although the input/output interfaces 318 and 338 are illustrated as separate elements from the processors 314 and 334 in FIG. 3, the present disclosure is not limited thereto, and the input/output interfaces 318 and 338 may be included in the processors 314 and 334.

The user terminal 210 and the information processing system 230 may include more components than those depicted in FIG. 3. In an embodiment, the user terminal 210 may be implemented to include at least some of the above-described input/output devices 320. The user terminal 210 may further include other components such as a transceiver, a Global Positioning System (GPS) module, a camera, various sensors, or a database. For example, when the user terminal 210 is a smart phone, various components commonly included in a smart phone may be provided, and various components such as an accelerometer, a gyro sensor, a microphone module, a camera module, various physical buttons, buttons through a touch panel, input/output ports, and a vibrating device may be included in the user terminal 210.

While a program or an application for detecting gas in a battery pack is operating, the processor 314 may receive text, images, video, voice, and/or actions input or selected through input devices connected to the input/output interface 318, including a touchscreen, a keyboard, a camera including an audio sensor and/or an image sensor, or a microphone. The processor may then function to store the received text, images, video, voice, and/or actions in the memory 312 or provide the such to the information processing system 230 through the communication module 316 and the network 220.

The processor 314 of the user terminal 210 may be configured to manage, process, and/or store information and/or data received from the input/output device 320, other user terminals, the information processing system 230, and/or a plurality of external systems. The information and/or data processed by the processor 314 may be provided to the information processing system 230 through the communication module 316 and the network 220. The processor 314 of the user terminal 210 may transmit information and/or data to the input/output device 320 through the input/output interface 318 to output the information and/or data. For example, the processor 314 may output or display the received information and/or data on a screen associated with the user terminal 210.

The processor 334 of the information processing system 230 may be configured to manage, process, and/or store information and/or data received from the plurality of user terminals 210 and/or the plurality of external systems. The information and/or data processed by the processor 334 may be provided to the user terminal 210 through the communication module 336 and the network 220.

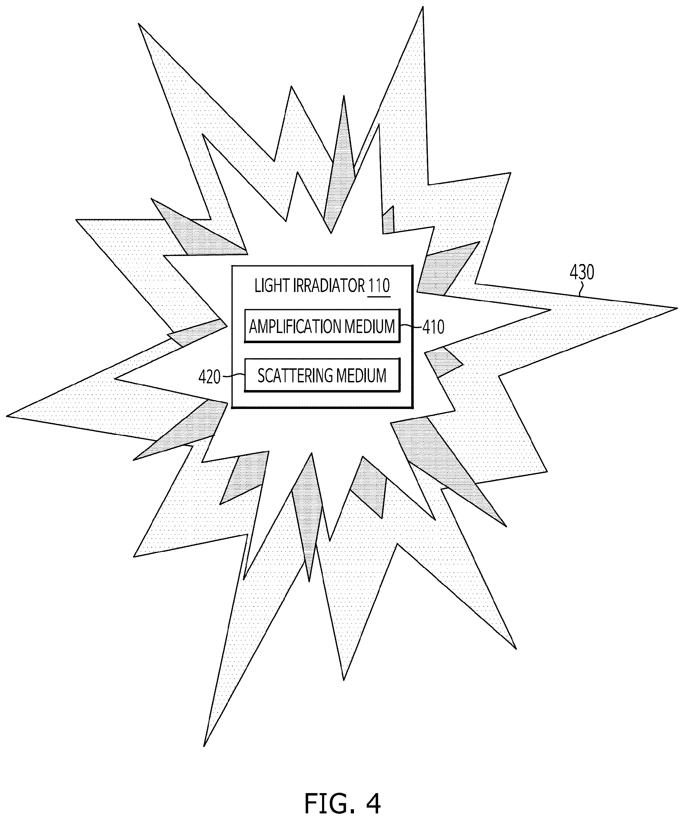

FIG. 4 illustrates a configuration of the light irradiator 110 according to an embodiment of the present disclosure.

Referring to FIG. 4, the light irradiator 110 may include at least one of an amplification medium 410 or a scattering medium 420. When specific ions or molecules absorb energy and subsequently return from a high energy state to a low energy state to emit light, the amplification medium 410 may amplify light 430 of the light irradiator 110. By randomly obstructing and dispersing paths of light, the scattering medium 420 may scatter the light 430 of the light irradiator 110 in multiple directions. Accordingly, the light 430 emitted from the light irradiator 110 may be emitted at a high intensity in multiple directions.

The light 430 emitted from the light irradiator 110 may be a random laser. In such a case, the light irradiator 110 may control an emission wavelength within a picosecond to sub microsecond range by using a metal-or semiconductor based nanostructure such as a silver (Ag) nanocluster, so that the spectrum of the light 430 may include or partially overlap an absorption spectrum of specific toxic gases. Additionally, because the light irradiator 110 emits the light 430 by utilizing multiple scattering in a disordered medium such as the amplification medium 410 and the scattering medium 420, a resonator (cavity) is not required for laser oscillation. Accordingly, the light 430 may include a broader emission spectrum that enables various gases having multiple absorption wavelengths in air to be detected simultaneously. Further, because a random laser emits strong light 430 in multiple directions, the light 430 can spread to all regions even in a structurally complex region, such as an interior of the battery pack. Compared with an existing laser that emits narrow-band light having a single wavelength with a single direction, a random laser as in the present disclosure can effectively detect various toxic gases.

When multiple scattering occurs in a disordered structure without a resonator, the light 430 may circulate along various paths instead of propagating only along a specific axis or direction. Therefore, the light irradiator 110 may emit high intensity light over a wider space. Because, unlike an existing resonator-based laser, alignment is not required, structural stability can be improved even in an environment where impacts or vibrations occur frequently.

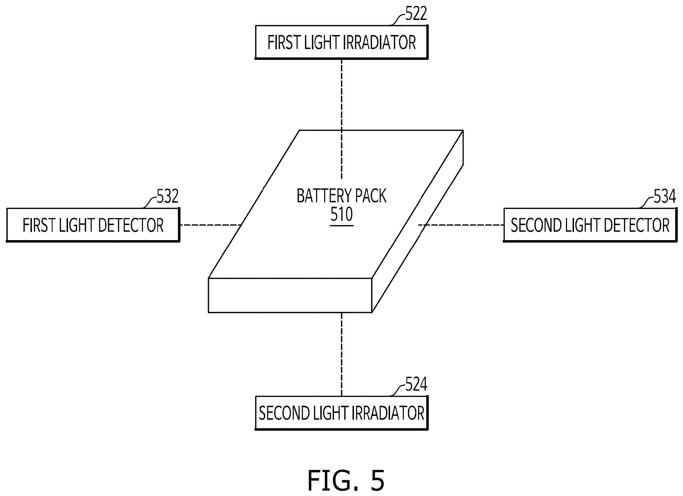

FIG. 5 illustrates examples of a light irradiator and a light detector according to an embodiment of the present disclosure.

Referring to FIG. 5, the light irradiator and the light detector may be disposed adjacent to a battery pack 510. The light irradiator may include a first light irradiator 522 and a second light irradiator 524. The light detector may include a first light detector 532 and a second light detector 534.

At least one of a position and a number of the light irradiator may be determined based on a shape of the battery pack 510. Additionally, at least one of a position and a number of the light irradiator may be determined based on a region exposed to light irradiated from the light irradiator and a peripheral region of the battery pack 510. Specifically, an illumination caused by light irradiated from the light irradiator may differ depending on the form of the battery pack 510. Accordingly, at least one of a position and a number of the light irradiator may be determined so that illumination in the peripheral region of the battery pack 510 is uniform.

In some examples, the first light irradiator 522 may be disposed on an upper side of the battery pack 510, and the second light irradiator 524 may be disposed on a lower side of the battery pack 510 opposite to the upper side of the battery pack 510. Accordingly, the positions of the first light irradiator 522 and the second light irradiator 524 may be such that all peripheral regions of the battery pack 510 are exposed to light irradiated from the light irradiator.

At least one of a position and a number of the light detector may be determined based on a path of light irradiated by the light irradiator. At least one of a position and a number of the light detector may be determined based on a region detectable by the light detector and a peripheral region of the battery pack 510. Specifically, as a path of light irradiated from the light irradiator becomes longer, a possibility that the light irradiated from the light irradiator interacts with gas in air before being detected by the light detector may increase. Accordingly, at least one of a position and a number of the light detector may be determined so that the path of the light irradiated from the light irradiator is maximized. For example, the first light detector 532 may be disposed at a first side of the battery pack 510 so that paths of light irradiated from the respective first and second light irradiators 522 and 524 is maximized. Further, the second light detector 534 may be disposed at a second side of the battery pack 510 opposite the first side so that paths of light irradiated from the respective first and second light irradiators 522 and 524 is maximized and to complement a region undetected by the first light detector 532. Accordingly, positions of the first light detector 532 and the second light detector 534 may be determined so that light irradiated from the light irradiator can be detected in all peripheral regions of the battery pack 510.

Although FIG. 5 illustrates the light irradiator and the light detector as being disposed outside the battery pack 510, the present disclosure is not limited to such a configuration. In other embodiments, each of the light irradiator and the light detector may be disposed on an inner surface of the battery pack 510 so that gas leaking from a battery module of the battery pack 510 can be detected. For example, the first light irradiator 522 may be disposed on an inner upper surface of the battery pack 510, and the second light irradiator 524 may be disposed on an inner lower surface of the battery pack 510. Additionally, the first light detector 532 may be disposed on an inner first side surface of the battery pack 510, and the second light detector 534 may be disposed on an inner second side surface opposite to the inner first side surface of the battery pack 510.

Although FIG. 5 illustrates that two light irradiators and two light detectors are provided, the present disclosure is not limited to such a configuration. For example, an additional light detector may be disposed at each of a front portion and a rear portion of the battery pack 510.

FIG. 6 is a flowchart of a method 600 for detecting gas in a battery pack according to an embodiment of the present disclosure.

Referring to FIG. 6, in step S610 a processor (for example, the processor 334 of FIG. 3) may detect light of a peripheral region of the battery pack using a light detector (for example, the light detector 120 of FIG. 1). The light of the peripheral region of the battery pack may be light that is irradiated into the peripheral region by a light irradiator (for example, the light irradiator 110 of FIG. 1) and interacts with air of the peripheral region of the battery pack. The light detector may include an infrared detector (IR detector).

Thereafter, the processor may generate, using the gas detector, spectrum data of the detected light in step S620. Specifically, the processor may convert the light detected by the light detector into a digital signal by using an analog-to-digital converter (ADC). The processor may filter noise of the converted digital signal and amplify the signal. The processor may also generate spectrum data by preprocessing the digital signal through an analysis algorithm. The analysis algorithm may use a Fourier transform, a Pearson correlation coefficient, or the like, but the present disclosure is not limited thereto. The spectrum data may represent a change in intensity of light with respect to a wavelength of light.

Thereafter, in step S630 the processor may determine whether an intensity reduction occurs in a predetermined spectrum of the detected light based on the spectrum data of the detected light. When gas leaks from the battery pack into the peripheral region of the battery pack, a gas molecule may absorb light of a specific spectrum (or a specific wavelength) of the light irradiated from the light irradiator. To detect this absorption effect, spectrum data of light when gas does not leak from the battery pack may be set as reference spectrum data. The processor may then compare the spectrum data of the detected light in the predetermined spectrum with the reference spectrum data in the predetermined spectrum. The predetermined spectrum may be associated with a spectrum of gas leaking from the battery pack. For example, the predetermined spectrum may be associated with an absorption spectrum corresponding to an infrared band of gas that can leak from the battery pack. Accordingly, the processor may determine that the intensity of the detected light decreases in the predetermined spectrum.

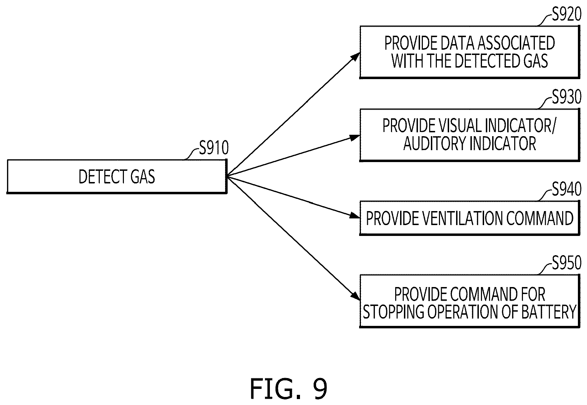

When it is determined that the intensity of the light does not decrease in the predetermined spectrum, in step S640 the processor may continuously monitor data associated with the light detected by the light detector. Such monitoring may be performed continuously or periodically in real time. When it is determined that the intensity of the light decreased in the predetermined spectrum, at step S650 the processor may determine that gas leaks from the battery pack. Examples of a methods of responding to gas leaks from the battery pack are described in detail below with reference to FIG. 9.

FIG. 7 illustrates an example method 700 of detecting gas in a battery pack according to an embodiment of the present disclosure.

Referring to FIG. 7, in step S710 a processor (for example, the processor 334 of FIG. 3) may detect light in a peripheral region of the battery pack using a light detector (for example, the light detector 120 of FIG. 1). The light of the peripheral region of the battery pack may be light irradiated into the peripheral region by a light irradiator (for example, the light irradiator 110 of FIG. 1) and interacted with air in the peripheral region of the battery pack. The light detector may include an infrared camera.

Thereafter, in step S720 the processor may generate speckle pattern data associated with the detected light using a gas detector. Specifically, the processor may generate speckle pattern data associated with the detected light by using a machine learning model based on temperature, intensity, and phase of the light detected by the light detector. The machine-learning model may be trained to output speckle pattern data in a two-dimensional image form that reflects contrast and illumination according to the intensity and phase of the light using the intensity and phase of the light as inputs. The processor may continuously generate the speckle pattern data over time.

Thereafter, in step S730 the processor may determine whether a speckle pattern changes. When gas leaked from the battery pack exists in the peripheral region of the battery pack, a gas molecule may refract the light irradiated from the light irradiator due to a difference in refractive index between the gas and air. To detect this distortion effect, a speckle pattern of light when gas does not leak from the battery pack may be set as reference speckle pattern data. The processor may then determine whether the speckle pattern changes by analyzing brightness and correlation of the respective speckle pattern data of the detected light and the reference speckle pattern data.

When it is determined that the speckle pattern does not change, in step S740 the processor may continuously monitor data associated with the light detected by the light detector. Such monitoring may be performed continuously or periodically in real time. When it is determined that the speckle pattern changes, in step S750 the processor may determine that gas is leaking from the battery pack. Examples of methods of responding to gas leaks from the battery pack are described in detail below with reference to FIG. 9.

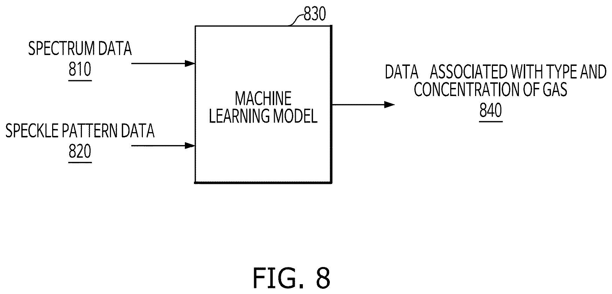

FIG. 8 illustrates an example of a machine-learning model 830 according to an embodiment of the present disclosure.

Referring to FIG. 8, when it is determined that gas is leaking from the battery pack, a processor (for example, the processor 334 of FIG. 3) may generate data 840 associated with a type and a concentration of the gas. Specifically, the processor may generate data 840 associated with the type and the concentration of the gas by using the machine learning model 830 based on data associated with the detected light. The data associated with the detected light may include at least one of spectrum data 810 of the light or speckle pattern data 820 of the light. In this case, the machine learning model 830 may be trained to output data 840 associated with the type and the concentration of the gas by using the spectrum data 810 of the light as input. Additionally or alternatively, the machine learning model 830 may be trained to output data 840 associated with the type and the concentration of the gas by using the speckle pattern data 820 of the light as input.

FIG. 9 illustrates an example of a response method when gas is detected according to an embodiment of the present disclosure.

In an embodiment, referring to FIG. 9, in step S910 a processor (for example, the processor 334 of FIG. 3) may detect gas leaking from the battery pack. Specifically, the processor may irradiate light into a peripheral region of the battery pack by using a light irradiator. The processor may detect light of the peripheral region of the battery pack by using a light detector. The processor may detect gas leaking from the battery pack based on data associated with the detected light by using a gas detector.

When gas leaking from the battery pack is detected, in step S920 the processor may provide data associated with the detected gas. The data associated with the detected gas may include, for example, a type, a concentration, and a detection time of the detected gas. The processor may transmit the data associated with the gas to a terminal associated with a battery manufacturer and/or a user who uses the battery pack.

When gas leaking from the battery pack is detected, in step S930 the processor may provide at least one of a visual indicator and an auditory indicator that represents detection of the gas. For example, when the battery pack is mounted on an electric vehicle or a hybrid vehicle, the processor may transmit a visual indicator and/or an auditory indicator associated with the gas leakage to a vehicle control unit (VCU) of the vehicle. The vehicle control unit may then output a visual indicator and/or an auditory indicator indicating gas leakage on a dashboard or a navigation device of the vehicle.

When gas leaking from the battery pack is detected, in step S940 the processor may provide a ventilation command for ventilating the gas. For example, when the battery pack is mounted on an electric vehicle or a hybrid vehicle, the processor may transmit a ventilation command to ventilate an interior of the vehicle and a cabinet in which the battery pack is mounted to the vehicle control unit of the vehicle. The vehicle control unit may then discharge the gas to outside of the vehicle by ventilating the interior of the vehicle and the cabinet in which the battery pack is mounted.

In step S950, the processor may provide a stop command for stopping operation of the battery. For example, when the battery pack is mounted to an electric vehicle or a hybrid vehicle, the processor may transmit a stop command for stopping operation of the battery to a battery management system (BMS) or the vehicle control unit of the vehicle. In such a case, the battery management system or the vehicle control unit may stop operation of the battery pack mounted to the vehicle to induce a driver in the vehicle to evacuate outside the vehicle. Operation of the battery pack may be stopped gradually.

With the configuration described herein, a warning regarding gas leakage is provided and operation of the battery can be stopped when gas is detected. Accordingly, accidents caused by gas leakage from the battery pack can be prevented.

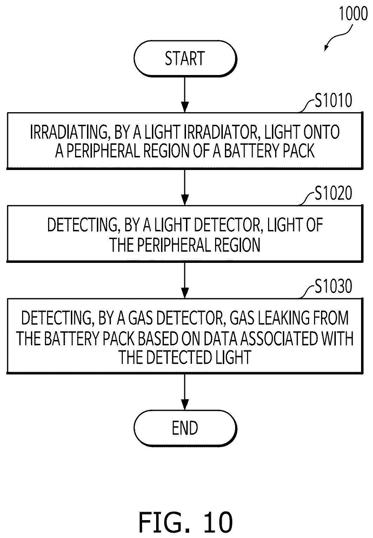

FIG. 10 is a flowchart of method 1000 of detecting gas in a battery pack according to an embodiment of the present disclosure.

Referring to FIG. 10, the method 1000 of detecting gas in a battery pack may be performed by at least one processor (for example, the processor 334 of FIG. 3). The method 1000 of detecting gas in a battery pack may start with a step S1010 where the processor irradiating light into a peripheral region of the battery pack by a light irradiator. The light irradiated by the light irradiator may include laser light emitted in multiple directions. The light irradiator may include an amplification medium and a scattering medium. Additionally, a spectrum of the light irradiated by the light irradiator may include an infrared spectrum. For example, the light irradiated by the light irradiator may be a random laser.

Thereafter, in step S10120 the processor may detect light of the peripheral region by a light detector. The light detector may include at least one of an infrared detector or an infrared camera.

Thereafter, in step S 1030 the processor may detect, using a gas detector, gas leaking from the battery pack based on data associated with the detected light. The data associated with the detected light may include, for example, spectrum data of the detected light. The data associated with the detected light may also include, for example, phase data and intensity data of the detected light.

The light irradiator and the light detector may be disposed adjacent to the battery pack. At least one of a position and a number of the light irradiator may be determined based on a form of the battery pack. Also, at least one of a position and a number of the light detector may be determined based on a path of the light irradiated by the light irradiator.

The processor may determine whether an intensity reduction occurs in a predetermined spectrum of the detected light based on the spectrum data of the detected light. The predetermined spectrum may be associated with a spectrum of gas leaking from the battery pack. The processor may determine whether the gas leaks based on determining the intensity reduction.

In an embodiment, the processor may determine whether a speckle pattern associated with the detected light changes based on phase data and intensity data of the detected light. Specifically, the processor may generate speckle pattern data associated with the detected light based on the phase data and the intensity data of the detected light by using a first machine learning model. The processor may then determine whether the speckle pattern changes based on the generated speckle pattern data. The processor may also determine whether the gas leaks based on determining whether the speckle pattern changed.

In an embodiment, the processor may generate data associated with a type and a concentration of the gas based on the data associated with the detected light by using a second machine learning model. When gas is detected, the processor may provide data associated with the detected gas. The data associated with the detected gas may include, for example, a type, a concentration, and a detection time of the detected gas.

When gas is detected, the processor may provide at least one of a visual indicator and an auditory indicator that represents detection of the gas. Also when gas is detected, the processor may provide at least one of a ventilation command for ventilating the gas and a stop command for stopping operation of the battery.

The above-described methods may be provided as computer programs stored in computer-readable recording mediums to be executed by a computer. The medium may continuously store a computer-executable program or may temporarily store the computer-executable program for execution or download. Additionally, the medium may be various recording means or storage means in a form in which one or several hardware devices are combined, and may be present distributed on a network, not limited only to media directly connected to a computer system. Examples of the medium include magnetic media such as a hard disk, a floppy disk, and magnetic tape, optical recording media such as a CD-ROM and a DVD, magneto-optical media such as a floptical disk, and a ROM, a RAM, or a flash memory configured to store program instructions. Further examples of the medium include recording media or storage media managed by an app store that distributes applications or various software, other sites, servers, or the like.

Methods, operations, or techniques of the present disclosure may be implemented by various means. For example, the techniques may be implemented by hardware, firmware, software, or a combination thereof. Those skilled in the art will understand that various exemplary logical blocks, modules, circuits, and algorithm steps described in connection with the present disclosure may be implemented by electronic hardware, computer software, or combinations thereof. To clearly illustrate this interchangeability between hardware and software, various exemplary components, blocks, modules, circuits, and algorithm steps have been described above generally in terms of their functional descriptions. Whether such functionality is implemented as hardware or software depends on the design constraints imposed on a particular application and an entire system. Those skilled in the art may implement the described functionality for each specific application in various ways; however, such implementations should not be interpreted as departing from the scope of the present disclosure.

In a hardware implementation, processing units used to perform the techniques may be implemented within one or more ASICs, DSPs, GPUs, digital-signal-processing devices (DSPDs), programmable-logic devices (PLDs), field-programmable gate arrays (FPGAs), processors, controllers, microcontrollers, microprocessors, electronic devices, other electronic units designed to perform the functions described in the present disclosure, computers, or combinations thereof.

Accordingly, various exemplary logical blocks, modules, and circuits described in connection with the present disclosure may be implemented or performed within a general-purpose processor, a DSP, an ASIC, an FPGA or other programmable-logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. The processor may also be implemented as a combination of computing devices, for example, a combination of a DSP and a microprocessor, multiple microprocessors, one or more microprocessors in conjunction with a DSP core, or any other such configuration.

In a firmware and/or software implementation, the techniques may be implemented as instructions stored on a non-transitory computer-readable medium, such as a RAM, a ROM, a non-volatile RAM (NVRAM), a PROM, an EPROM, an EEPROM, a flash memory, a compact disc (CD), or a magnetic or optical data-storage device. The instructions may be executed by one or more processors and may cause the one or more processors to perform certain aspects of the functions of the present disclosure.

When implemented in software, the techniques may be stored or transmitted as one or more instructions or code on a computer-readable medium. Computer-readable media include both storage media and communication media including any media that facilitate transfer of a computer program from one place to another. Storage media may be any available media that can be accessed by a computer. Non-limiting examples of the computer-readable media include a RAM, a ROM, an EEPROM, a CD-ROM or other optical-disk storage, a magnetic-disk storage or other magnetic-storage devices, or any other media that can be used to carry or store desired program code in the form of instructions or data structures and that can be accessed by a computer. In addition, any connection is properly termed a computer-readable medium.

For example, software may be transmitted from a website, a server, or other remote sources using coaxial cable, fiber-optic cable, twisted-pair cable, digital-subscriber lines (DSL), or wireless technologies such as infrared, radio, and microwave. Coaxial cable, fiber-optic cable, twisted-pair cable, DSL, or wireless technologies such as infrared, radio, and microwave are included within the definition of the medium. As used herein, disks and discs include a compact disc (CD), a laser disc, an optical disc, a digital versatile disc (DVD), a floppy disk, and a Blu-ray disc, in which disks reproduce data magnetically, while discs reproduce data optically with lasers. Combinations of the above are also included within the scope of computer-readable media.

Software modules may reside in RAM, flash memory, ROM, EPROM, EEPROM, registers, a hard disk, a removable disk, a CD-ROM, or any other form of storage medium known in the art. An exemplary storage medium may be coupled to a processor so that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in the user terminal.

Although the embodiments described above utilize aspects of the present disclosure in one or more stand-alone computer systems, the present disclosure is not limited thereto, and may be implemented in any computing environment such as a network or a distributed computing environment. Furthermore, the aspects of the present disclosure may be implemented on multiple processing chips or devices, and storage may likewise be affected across multiple devices. Such devices may include PCs, network servers, and portable devices.

According to various aspects, a method may include: determining a spectral response (e.g., including light) of a peripheral region of a battery pack, e.g., including a spectral response to light (e.g., irradiating light), to which the peripheral region is exposed (e.g., irradiated) and/or by a sensor (e.g., detected by the sensor); determining a state (e.g., health state) of the battery pack based on the spectral response, e.g., based on data associated with (e.g., representing) the spectral response (e.g., the light). For example, the state (e.g., health state) of the battery pack may be based on a comparison (e.g., a result thereof) of the spectral response (e.g., detected light) with a reference response (e.g., a predetermined spectrum), e.g., based on a difference thereof and/or data representing the result of the comparison.

According to various aspects, a method may include: determining a spectral response (e.g., including light) of a peripheral region of a battery pack, e.g., including a spectral response to light (e.g., irradiating light), to which the peripheral region is exposed (e.g., irradiated) and/or by a light detector (e.g., detected by the light detector); determining gas leaking from the battery pack (e.g., an amount, e.g., expressed as concentration of the gas, and/or a type of the gas) based on the spectral response, e.g., based on data associated with (e.g., representing) the spectral response (e.g., the light). The gas leaking from the battery pack may be determined based on a comparison (e.g., a result thereof) of the spectral response (e.g., detected light) with a reference response (e.g., a predetermined spectrum), e.g., based on a difference thereof and/or data representing the result of the comparison.

According to various aspects, examples of the state may include healthy (e.g., when no gas leaking from the battery pack is detected) and unhealthy (e.g., when the gas leaking from the battery pack is detected).

According to various aspects, the result of the comparison may be indicative of a difference, e.g., an intensity difference (e.g., reduction) and/or phase difference, of the spectral response with respect to the reference response. For example, the state (e.g., health state) of the battery pack may be determined as unhealthy, e.g., leaking (also referred to as leaking state), when the difference between the spectral response and the reference response exceeds a predetermined (e.g., saved) threshold, and preferably determined as healthy otherwise.

According to various aspects, the term "predetermined" with respect to information, such as, for example, data, one or more variables, one or more values, etc., may be implemented as preset and/or by saving the information, e.g., saved by a memory and/or by a preset file.

According to various aspects, the method may include providing (e.g., outputting) a signal (e.g., indicator) indicative of the result of the determination (e.g., of the state and/or of the gas leaking from the battery pack). For example, the signal may include an audio signal and/or visual signal and/or may be configured as warning. For example, the signal may be generated by a signal generator, e.g., including an audio signal generator and/or a visual signal generator. Alternatively or additionally, the signal may include one or more commands and/or generated in accordance with a network communication protocol (e.g., field bus communication protocol).

According to various aspects, the method as detailed herein may be implemented by a processor, e.g., configured to perform the method and/or configured to control the light irradiator and/or the light detector. Alternatively or additionally, the processor may be configured to determine gas leaking from the battery pack (e.g., an amount, e.g., expressed as concentration of the gas, and/or a type of the gas) based on the spectral response (e.g., including light) of the peripheral region of the battery pack and/or data associated with the spectral response (e.g., including light). For example, the processor may generate one or more commands, for which examples include a ventilation command, a stop command and/or a command (also referred to as signal generation command) to generate the signal (e.g., indicator) indicative of the result of the determination (e.g., of the state and/or of the gas leaking from the battery pack). The one or more command may be generated in accordance with a network communication protocol (e.g., field bus communication protocol) and/or addressed to the respective device, e.g., a ventilator, an operation controller and/or a signal generator, e.g., including an audio signal generator and/or a visual signal generator.

According to various aspects, the method as detailed herein may allow to detect gas (e.g., generated within a battery pack) by detecting some of the gas leaking from the battery pack, that is, gas at the battery pack. According to various aspects, the method as detailed herein may allow to monitor the battery pack, e.g., a state (e.g., health state) of the battery pack.

According to various aspects, the light detector may include an optoelectronic sensor, e.g., a camera. Alternatively or additionally, the light irradiator may include an optoelectronic light source.

According to various aspects, exemplary components of the light may include infrared light and/or visible light. According to various aspects, exemplary wavelengths of the light may be within a range from 400 Nanometer to 1 Micrometer, from 400 Nanometer to 0.1 Micrometer.

According to various aspects, the method may include determine data associated with (e.g., detected) light of a response (e.g., spectral response) of a peripheral region of the battery pack to an exposure to (e.g., random lasing) light.

According to various aspects, various operations (e.g., data transmission and/or command generation) and/or communications (e.g., with the light detector, the light irradiator, the information processing system 230, and/or via network 220) may be configured in accordance with a network communication protocol. For example, communication within an automotive network and/or the components for monitoring the battery pack may be configured in accordance with a field bus communication protocol, such as, for example, a CAN protocol.

Although the present disclosure has been described above with respect to embodiments thereof, the present disclosure is not limited thereto. Various modifications and variations can be made thereto by those skilled in the art within the scope of the present disclosure.

## Claims

1. A method for a battery pack (140), the method comprising:
irradiating light (112) into a peripheral region of the battery pack (140);
detecting light (112) from the peripheral region; and
detecting that gas (142) is leaking from the battery pack (140) based on data associated with the detected light (112).

2. The method as claimed in claim 1, wherein the irradiating light (112) is laser light emitted by a light irradiator (110) in multiple directions.

3. The method as claimed in claim 1 or 2, wherein the irradiating light (112) is emitted by a light irradiator (110) that comprises an amplification medium (410) and a scattering medium (420).

4. The method as claimed in one of claims 1 to 3, wherein a spectrum of the irradiating light (112) comprises an infrared spectrum.

5. The method as claimed in one of claims 1 to 4, wherein the irradiating light (112) is emitted by a light irradiator (110) and the detected light (112) is detected by a light detector (120), with the light irradiator (110) and the light detector (120) being disposed adjacent to the battery pack (140).

6. The method as claimed in one of claims 1 to 5, wherein the detected light (112) is detected by one or more light detectors (532, 534), and at least one of a position and a number of the light detectors (532, 534) is determined based on a path of the light (112) irradiated by the light irradiator (522, 524).

7. The method as claimed in one of claims 1 to 6, wherein the data associated with the detected light (112) comprises spectrum data (810) of the detected light (112).

8. The method as claimed in claim 7, wherein detecting the gas (142) comprises:
determining, based on the spectrum data (810) of the detected light (112), whether an intensity reduction occurs in a predetermined spectrum of the detected light (112); and
determining, based on whether the intensity reduction occurs, whether the gas (142) leaks from the battery pack (140).

9. The method as claimed in claim 8, wherein the predetermined spectrum is associated with a spectrum of gas (142) leaking from the battery pack (140).

10. The method as claimed in one of claims 1 to 9, wherein the data associated with the detected light (112) comprises phase data and intensity data of the detected light (112).

11. The method as claimed in claim 10, wherein detecting the gas (142) comprises:
determining, based on the phase data and the intensity data of the detected light (112), whether a speckle pattern associated with the detected light (112) changes; and
determining, based on whether the speckle pattern changes, whether the gas (142) leaks from the battery pack (140).

12. The method as claimed in claim 11, wherein determining whether the speckle pattern changes comprises:
using a machine learning model (830) and the phase data and the intensity data of the detected light (112) to generate speckle pattern data (820) associated with the detected light (112); and
determining whether the speckle pattern changes based on the generated speckle pattern data (820).

13. The method as claimed in on of claims 1 to 12, wherein the machine-learning model (830) is a first machine-learning model, and
wherein the method further comprises:
using a second machine learning model (830) and the data associated with the detected light (112) to generate data indicative of a type and a concentration of the gas (840).

14. A non transitory computer readable recording medium storing instructions that, when executed by a computer, cause the computer to perform the method as claimed in one of claims 1 to 13.

15. A system for detecting gas in a battery pack (140), the system comprising:
a light irradiator (110) configured to irradiate light (112) into a peripheral region of the battery pack (140);
a light detector (120) configured to detect light (112) from the peripheral region; and
a gas detector (130) configured to detect gas (142) leaking from the battery pack (140) based on data associated with the detected light (112).
